# EUROPÄISCHE PATENTSCHRIFT

(11) **EP 2 171 349 B1**
(45) Veröffentlichungstag und Bekanntmachung des Hinweises auf die Patenterteilung: **03.04.2013**
(21) Anmeldenummer: 08759367.9
(22) Anmeldetag: 25.06.2008
(51) Int. Cl.: F21V 7/18, G03B 15/06

(54) **FALTBARER REFLEKTORSCHIRM**
FOLDABLE REFLECTOR SCREEN
ÉCRAN RÉFLÉCHISSANT PLIANT

(30) Priorität: 29.06.2007 DE 102007031135
(43) Veröffentlichungstag der Anmeldung: 07.04.2010
(73) Patentinhaber: Briese, Hans-Werner Friedrich, 22303 Hamburg (DE)
(72) Erfinder: Briese, Hans-Werner Friedrich, 22303 Hamburg (DE)
(74) Vertreter: Stork Bamberger
(86) Internationale Anmeldenummer: PCT/EP2008/005435
(87) Internationale Veröffentlichungsnummer: WO 2009/003705

(56) Entgegenhaltungen:
- DE-A1- 2 203 786
- DE-U1-202004 011 140
- US-A- 3 851 164
- US-A1- 2006 152 925
- US-A1- 2006 203 491

## Beschreibung

Die Erfindung betrifft einen faltbaren Reflektorschirm, umfassend ein flexibles, tuchartiges Reflexionselement mit einer außen liegenden Stütz- und Spannstruktur sowie ein Trägerelement mit mindestens einem Leuchtmittel, wobei das Reflexionselement in aufgespanntem Zustand des Reflektorschirms einen im Wesentlichen rotationssymmetrischen Körper mit einer Lichtaustrittsöffnung bildet.

Derartige Reflektorschirme kommen insbesondere im Bereich der Fotografie oder des Films zum Einsatz. Mittels der Reflektorschirme werden vorzugsweise unterschiedliche Licht- und/oder Schatteneffekte und -bilder, also unterschiedliche Bildcharakteristika erzeugt bzw. gestaltet. Die Reflektorschirme können aber auch zum Ausleuchten von Räumen, zur gezielten Beleuchtung eines Objekts oder dergleichen eingesetzt werden. Gerade im Bereich der Fotografie und des Films besteht das Erfordernis, dass die mobilen Reflektorschirme zu Zwecken des Transports einerseits leicht sind und andererseits ein geringes Transportvolumen aufweisen. Erst am Einsatzort kann der "regenschirmartige" Reflektorschirm dann zu seiner vollen Größe aufgespannt werden.

Es sind Reflektorschirme mit den eingangs genannten Merkmalen bekannt, bei denen das Reflexionselement in aufgespanntem Zustand des Reflektorschirms in einem die Mittelachse des Trägerelementes enthaltenen Schnitt entweder einer Parabel oder einer Ellipse oder einer anderen üblichen Form entspricht. Beispielhaft ist das Dokument DE 196 18 434 C2 genannt. Darin ist das Reflektionselement im aufgespannten Zustand im Schnitt ein ellipsenförmiger Körper. Diese Reflektorschirme, die alle im die Mittelachse enthaltenen Schnitt jeweils nur einer einzigen geometrischen Gestalt entsprechen, weisen jedoch den Nachteil auf, dass sie in der Vielfalt der Gestaltungsmöglichkeiten beschränkt sind. Mit anderen Worten zeigen die bekannten Reflektoren in jedem parallel zur Mittelachse verlaufenden Schnitt dieselbe geometrische Kurve, beispielsweise eine Parabel, elliptische bzw. ellipsennahe Form oder dergleichen. Das bedeutet, dass jede geometrische Gestalt eines Rotationskörpers lediglich eine bestimmte Reflexion der Lichtstrahlen ermöglichen. Zum Überlagern mehrerer Reflexionsbereiche sind üblicherweise mehrere Reflektoren notwendig. Der Aufwand hierfür ist erheblich.

Die US 3 851 164 offenbart einen faltbaren Reflektor mit einem Stoffbespann, welcher nach dem Muster eines Regenschirms aufgespannt wird.

Es ist daher Aufgabe der vorliegenden Erfindung, einen leichten und einfach handhabbaren Reflektorschirm mit einem größeren Einsatzbereich vorzuschlagen.

Diese Aufgabe wird durch einen Reflektorschirm der eingangs genannten Art dadurch gelöst, dass das Reflexionselement aus mindestens zwei Reflexionsabschnitten gebildet ist, wobei die beiden Reflexionsabschnitte eine in einem die Rotationsachse des Reflektorschirms enthaltenen Schnitt jeweils unterschiedliche geometrische Form aufweisen und der eine Reflexionsabschnitt im aufgespannten Zustand des Reflektorschirms im Schnitt einer Ellipse und der andere Reflektionsabschnitt im Schnitt einer Parabel entspricht, und wobei zusätzlich zur Stütz- und Spannstruktur ein weiteres Spannmittel vorgesehen ist, das derart ausgebildet und angeordnet ist, dass einer der Reflexionsabschnitte mit einer zusätzlichen Spannkraft beaufschlagbar ist und Schirmspeichen der Stütz- und Spannstruktur, die im Bereich des ellipsenförmigen Reflexionsabschnitts eng am Reflexionselement anliegen, im Bereich des parabelförmigen Reflexionsabschnitts mit einem Abstand zu diesem verlaufen. Mit dem die Rotationsachse enthaltenen Schnitt ist ein Schnitt parallel zur Mittelachse bzw. Rotationsachse gemeint, wie er in den Figuren dargestellt ist. Das bedeutet, dass die durch das Reflexionselement beschriebene bzw. gebildete Hülle im Schnitt eine Kurve beschreibt, die aus unterschiedlichen geometrischen Kurvenabschnitten gebildet ist. Durch diese erfindungsgemäße Ausbildung ist es möglich, mit einem einzigen Reflektorschirm die Reflexionseigenschaften mehrerer geometrischer Körper zu kombinieren bzw. zu mischen, wobei selbstverständlich ist, dass die geometrischen Körper bzw. Kurvenabschnitte auch in angenäherter Form umfasst sind. Damit sind die Wesentlichen Reflexionen bzw. Lichtstrahlenverläufe erreichbar, so dass auf zusätzliche Reflektorschirme etc. verzichtet werden kann. Mittels der Stütz- und Spannstruktur, die üblicherweise einzelne Speichen aufweist, ist zwar die Form einer Ellipse bzw. eine ellipsennahe Form darstellbar. Für die Abbildung einer Parabel ist jedoch eine erhebliche stärkere Biegung der Speichen notwendig, die mit den herkömmlichen Materialien nicht wirtschaftlich darstellbar ist. Durch das zusätzliche Spannmittel ist die Formgebung des Reflexionselementes zu einer Parabel besonders zweckmäßig und kostengünstig möglich.

Eine zweckmäßige Ausführungsform der Erfindung sieht vor, dass die beiden Reflexionsabschnitte in Bezug auf die Rotationsachse bzw. Mittelachse des Reflektorschirms hintereinander liegen. Dadurch ist mit einfacher Handhabung eine vielfältige Verstellung der Licht- und Schatteneffekte gewährleistet.

Vorzugsweise sind zwischen dem parabelförmigen Reflexionsabschnitt und den Speichen der Stütz- und Spannstruktur Spannelemente angeordnet. Durch die Zuordnung der Spannelemente zu den Speichen und der damit verbundenen Verteilung der Spannelemente über den Umfang des Rotationskörpers herum ist eine besonders genaue Formgebung des Reflexionsabschnitts sichergestellt. Anders ausgedrückt ist trotz der starken Krümmung des parabelförmigen Reflexionsabschnitts eine gleichmäßige, faltenfreie Spannung sichergestellt.

Eine besonders zweckmäßige Ausführungsform der Erfindung ist dadurch gekennzeichnet, dass die Spannelemente jeweils aus im Wesentlichen senkrecht zum Reflexionselement dehnbaren Stoffelementen gebildet ist. Neben einer sehr leichten und damit besonders gut handhabbaren Ausbildung der Spannelemente ist auch eine gleichmäßige Einbringung der Spannkraft über eine lange Distanz gewährleistet.

Weitere zweckmäßige oder vorteilhafte Merkmale und Ausgestaltungen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine Seitenansicht einer schematischen Darstellung eines Reflektorschirms mit einem einteiligen Reflexionselement, und
- Fig. 2: eine Seitenansicht einer schematischen Darstellung eines Reflektorschirms mit einem zweiteiligen Reflexionselement.

Die im Folgenden beschriebenen Reflektorschirme dienen insbesondere zum Erzeugen von Licht- und/oder Schatteneffekten im Bereich der Fotografie und des Films. Selbstverständlich kann der Reflektorschirm auch in anderen Gebieten zum Einsatz kommen.

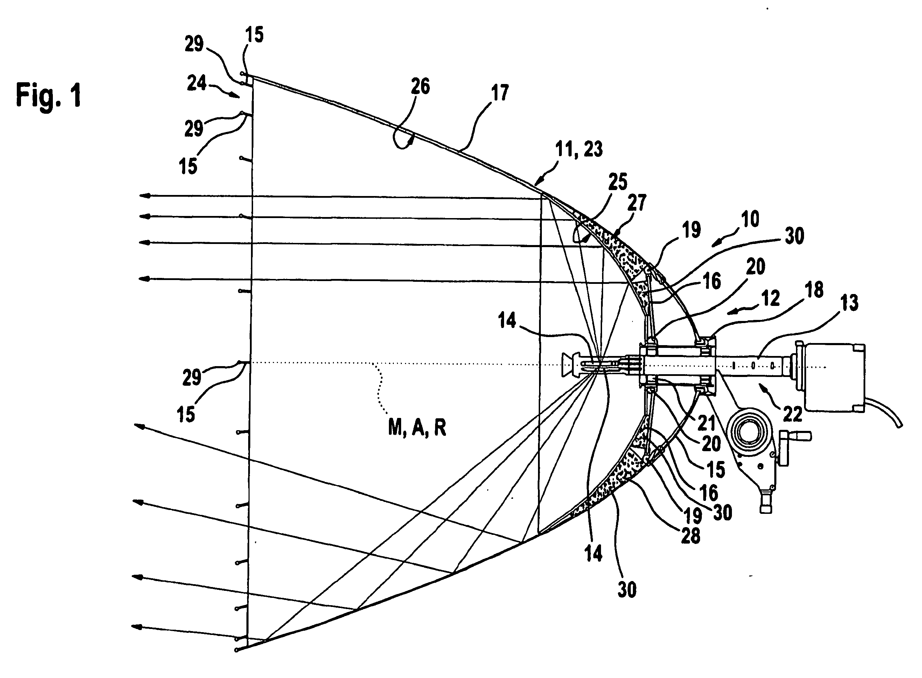

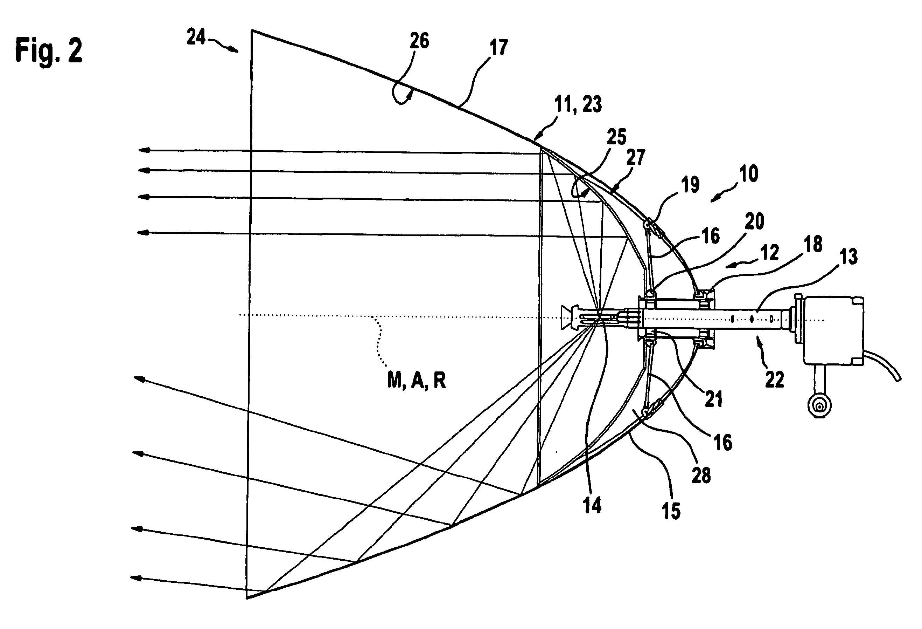

Der Reflektorschirm 10 gemäß Figur 1 ist als faltbarer Reflektorschirm 10 ausgebildet und umfasst ein Reflexionselement 11, eine Stütz- und Spannstruktur 12 sowie ein Trägerelement 13 mit mindestens einem Leuchtmittel 14. Das Reflexionselement 11 ist aus einem flexiblen Material gebildet, derart, dass es aus einem zusammengefalteten in einen aufgespannten Zustand und zurück bringbar ist. Zum Stützen und Spannen des tuchartigen Reflexionselementes 11 ist die Stütz- und Spannstruktur 12 vorgesehen, die außen liegend angeordnet ist. Das bedeutet, dass alle Komponenten der Stütz- und Spannstruktur 12 außerhalb der innenseitig ausgebildeten Reflexionsfläche des Reflexionselementes 11 liegen. Genauer weist die Stütz- und Spannstruktur 12 Schirmspeichen 15 und Spreizspeichen 16 auf. Die Schirmspeichen 15 sind in außen liegenden Säumen 17 des Reflexionselementes 11 eingeschoben und im Bereich eines Lagerkörpers 18 gelenkig an diesem befestigt. Die Schirmspeichen 15 weisen in geringem Abstand von ihren Befestigungspunkten am Lagerkörper 18 Spreizgelenke 19 auf. Die Schirmspeichen 15 können im Bereich einer Lichtaustrittsöffnung 24, die weiter unten beschrieben wird, über das Reflexionselement 11 hinausragen (siehe Figur 1) oder mit dem Reflexionselement 11 abschließen (siehe Figur 2). An den überstehenden Enden der Schirmspeichen 15 können optional z.B. kugelförmige Endstücke 29 oder dergleichen angeordnet sein. Die Spreizspeichen 16 sind im Bereich der Spreizgelenke 19 mit den Schirmspeichen 15 verbunden. Das andere Ende der Spreizspeichen 16 ist an korrespondierenden Kniegelenken 20 oder dergleichen gelagert. Die Kniegelenke 20 wiederum sind an einem ringförmigen Schiebeelement 21 angeordnet. Dieser Aufbau und das Funktionsprinzip sind grundsätzlich bekannt, z.B. aus der oben genannten DE 196 18 434 C2. Selbstverständlich kann die Stütz- und Spannstruktur auch in jeder anderen üblichen Weise aufgebaut sein.

Das Trägerelement 13 mit einem Leuchtmittel 14 oder mehreren Leuchtmitteln 14, die hintereinander oder versetzt zueinander angeordnet sein können, kann als starres Element oder aber als Fokussiereinheit 22, wie in der bevorzugten Ausführungsform gezeigt, ausgebildet sein. Die Fokussiereinheit 22 für das oder jedes Leuchtmittel 14 ist derart ausgebildet, dass das Trägerelement 13 axial in Richtung der Mittelachse M des Reflektorschirms 10 relativ zu diesem verschiebbar ist. Entsprechend der Position des Trägerelementes 13 innerhalb des Reflexionselementes 11 ändern sich die Verläufe der reflektierten Lichtstrahlen. In der gezeigten Figur 1 sind die Verläufe der reflektierten Lichtstrahlen daher nur beispielhaft für eine Position des Trägerelementes 13 dargestellt.

Das Reflexionselement 11 bildet in aufgespanntem Zustand einen im Wesentlichen rotationssymmetrischen Körper 23 um die Rotationsachse R, die in der gezeigten Ausführung der Mittelachse M entspricht. Das Reflexionselement 11 weist auf der dem Trägerelement 13 abgewandten Seite eine Lichtaustrittsöffnung 24 auf. In der gezeigten Ausführungsform liegt das Leuchtmittel 14 mit seiner optischen Achse A direkt auf der Mittelachse M. Die beiden Achsen A und M können jedoch auch versetzt zueinander liegen. Das den Körper 23 bildende bzw. beschreibende Reflexionselement 11 weitet sich von einem Ursprung, in dem das Trägerelement 13 in das Reflexionselement 11 eingeführt ist, zur Lichtaustrittsöffnung 24 hin auf. Der Ursprung ist als "hinten definiert" während die Lichtaustrittsöffnung 24 als "vorne" definiert wird.

Das Reflexionselement 11, das vorzugsweise aus einem einstückigen Zuschnitt (siehe Figur 1) besteht, in anderen Ausführungen (siehe z.B. Figur 2) aber auch mehrteilig ausgebildet oder aus mehreren Einzelelementen zusammengestellt sein kann, ist aus mindestens zwei Reflexionsabschnitten 25 und 26 gebildet. Alternativ kann das Reflexionselement 11 auch aus mehr als zwei Reflexionsabschnitten gebildet sein. Anders ausgedrückt ist das Reflexionselement 11 derart ausgebildet bzw. geformt, dass zwei oder mehr in ihrer geometrischen Form unterschiedliche Reflexionsabschnitte 25, 26 existieren. Die beiden Reflexionsabschnitte 25, 26 weisen eine in einem die Rotationsachse R des Reflektorschirms 10 enthaltenen Schnitt jeweils unterschiedliche geometrische Form auf. Das bedeutet, dass vom Leuchtmittel 14 auf das Reflexionselement 11 auftreffende Lichtstrahlen in einem Reflexionsabschnitt 25 anders reflektiert werden als in dem anderen Reflexionsabschnitt 26.

Die beiden Reflexionsabschnitte 25, 26 liegen in Bezug auf die Mittelachse M bzw. Rotationsachse R des Reflektorschirms 10 hintereinander. Anders ausgedrückt treffen die Lichtstrahlen in einem hinteren Bereich des Reflektorelementes 11 auf einen ersten Reflexionsabschnitt 25 mit einer im Schnitt ersten geometrischen Form und in einem vorderen Bereich des Reflektorelementes 11 auf einen zweiten Reflexionsabschnitt 26 mit einer im Schnitt zweiten geometrischen Form. Einer der Reflexionsabschnitte 25 oder 26 entspricht im aufgespannten Zustand des Reflektorschirms 10 im Schnitt einer Ellipse, während der andere Reflexionsabschnitt 26 oder 25 im Schnitt einer Parabel entspricht. Selbstverständlich können die Reflexionsabschnitte 25, 26 im Schnitt auch andere geometrische Formen beschreiben. In der gezeigten Ausführungsform liegt der parabelförmige Reflexionsabschnitt 25 hinten im Bereich des Trägerelementes 13. Ausgehend von dem Trägerelement 13 liegt der ellipsenförmige Reflexionsabschnitt 26 hinter dem parabelförmigen Reflexionsabschnitt 25 vorne im Bereich der Lichtaustrittsöffnung 24.

Wie bereits beschrieben, wird das Reflexionselement 11 grundsätzlich durch die Stütz- und Spannstruktur 12 gespannt. Allerdings liegen die Schirmspeichen 15 lediglich im Bereich des vorderen, ellipsenformigen Reflexionsabschnitts 26 in den Säumen 17 eng am Reflexionselement 11 an. Im Bereich des hinteren, parabelförmigen Reflexionsabschnitts 25 verlaufen die Schirmspeichen 15 mit einem Abstand zu dem Reflexionselement 11. Zur Spannung des nicht unmittelbar mit den Schirmspeichen 15 gespannten Reflexionsabschnitts 25 ist zusätzlich zur Stütz- und Spannstruktur 12 ein weiteres Spannmittel 27 vorgesehen, das derart ausgebildet und angeordnet ist, dass einer der beiden Reflexionsabschnitts 25, 26, im vorliegenden Fall der parabelförmige hintere Reflexionsabschnitt 25, mit einer zusätzlichen Spannkraft beaufschlagbar ist. Konkret bedeutet dies, dass mit dem zusätzlichen Spannmittel 27 aus einem einstückigen Zuschnitt im Schnitt unterschiedliche geometrische Formen erzeugbar sind. Mit anderen Worten ist das Spannmittel 27 dazu geeignet, das tuchartige Reflexionselement 11 mindestens partiell in eine von der durch die Schirmspeichen 15 beschriebenen Form abweichende Form zu bringen.

Wie bereits erwähnt, ist zwischen dem hinteren, parabelförmigen Reflexionsabschnitt 25 und den Schirmspeichen 15 ein Abstand ausgebildet, in dem Spannelemente 28 angeordnet sind. Genauer bilden mehrere Spannelemente 28 das Spannmittel, wobei die Anzahl der Spannelemente 28 vorzugsweise der Anzahl der Schirmspeichen 15 entspricht. Selbstverständlich kann die Anzahl sowohl der Spannelemente 28 als auch der Schirmspeichen 15 variieren. In der in Figur 1 gezeigten Ausführungsform ist jedes Spannelement 28 aus zwei Spannfahnen 30 gebildet. Die Ausbildung der Spannelemente 28 kann jedoch ebenfalls variieren. Die Ausbildung der Spannelemente 28 kann vielfältig sein. Bevorzugt sind Spannelemente 28 derart ausgebildet und eingerichtet, dass sie in einer Richtung dehnbar und in anderen Richtungen nicht dehnbar sind. Damit lässt sich besonders effektiv eine Spannkraft auf das Reflexionselement 11 und insbesondere auf den hinteren parabelförmigen Reflexionsabschnitt 25 übertragen. Die Dehnungsrichtung erstreckt sich im Wesentlichen senkrecht zur Oberfläche des gespannten Reflexionselementes 11. Dabei haben sich Stoffelemente mit den genannten Eigenschaften als besonders bevorzugt herausgestellt, da sie neben der gleichmäßigen Aufbringung der Spannkraft sehr geringes Gewicht aufweisen. Optional können auch andere Spannmittel, insbesondere auch Folien oder dergleichen vorgesehen sein.

Die Stoffelemente sind auf der dem Reflexionselement 11 zugewandten Seite fest mit diesem z.B. durch Vernähen, und auf der anderen Seite an den jeweils zugeordneten Schirmspeichen 15 der Stütz- und Spannstruktur 12 befestigt. Die Befestigung am Reflexionselement 11 besteht linienförmig derart, dass die Stoffelemente in Verlängerung der Säume 17 längs am Umfang des Reflexionselementes 11 verlaufen. An den Schirmspeichen 15 sind die Stoffelemente beispielsweise ebenfalls durch eine Naht oder durch Abstecken oder dergleichen quasi aufgehängt. Die Spannkraft des Spannmittels 27 jedes einzelnen Spannelementes 28 ist einstellbar, indem der Abstand zwischen der Schirmspeiche 15 und dem Reflexionsabschnitt 25 verkürzt wird.

Das Reflexionselement 11 selbst ist auf seiner dem Leuchtmittel 14 zugewandten Innenseite strukturiert ausgebildet. Es besteht vorzugsweise aus einer Metallfolie oder einem Trägerstoff, auf den eine mit Aluminium oder dergleichen bedampfte Kunststofffolie, beispielsweise aus Polyester kaschiert ist. Andere Materialien bzw. Materialkombinationen oder Beschichtungen sind ebenfalls möglich.

Betrachtet man die beiden geometrischen Grundformen der Reflexionsabschnitte 25, 26, liegen deren Ursprünge bzw. Scheitelpunkte Sₚ mit einem Abstand zueinander. Der Abstand kann variieren und sogar auf Null reduziert werden. Anders ausgedrückt können die beiden Reflexionsabschnitte 25, 26 auch derart geformt sein, dass die Scheitelpunkte Sₚ der durch die Reflexionsabschnitte 25, 26 gebildeten geometrischen Körper Ellipse und Parabel in einem gemeinsamen Scheitelpunkt S_{P} übereinander liegen. Bevorzugt ist jedoch ein Versatz in Richtung der Mittelachse M.

In einer weiteren Ausführungsform gemäß Figur 2 ist das Reflexionselement 11 geteilt ausgebildet. Es existieren zwei separate Reflexionsabschnitte 25, 26, wobei der hintere parabelförmige Reflexionsabschnitt 25 innerhalb des vorderen ellipsenförmigen Reflexionsabschnitts 26 angeordnet ist. Ansonsten ist der Aufbau entsprechend der oben beschriebenen Ausführungsform.

## Patentansprüche

1. Faltbarer Reflektorschirm (10), umfassend ein flexibles, tuchartiges Reflexionselement (11) mit einer außen liegenden Stütz- und Spannstruktur (12) sowie ein Trägerelement (13) mit mindestens einem Leuchtmittel (14), wobei das Reflexionselement (11) in aufgespanntem Zustand des Reflektorschirms (10) einen im Wesentlichen rotationssymmetrischen Körper mit einer Lichtaustrittsöffnung (24) bildet, **dadurch gekennzeichnet, dass** das Reflexionselement (11) aus mindestens zwei Reflexionsabschnitten (25, 26) gebildet ist, wobei die beiden Reflexionsabschnitte (25, 26) eine in einem die Rotationsachse R des Reflektorschirms (10) enthaltenen Schnitt jeweils unterschiedliche geometrische Form aufweisen, wobei der eine Reflexionsabschnitt (25 oder 26) im aufgespannten Zustand des Reflektorschirms (10) im Schnitt einer Ellipse und der andere Reflexionsabschnitt (26 oder 25) im Schnitt einer Parabel entspricht, und wobei zusätzlich zur Stütz- und Spannstruktur (12) ein weiteres Spannmittel (27) vorgesehen ist, das derart ausgebildet und angeordnet ist, dass einer der Reflexionsabschnitte (25 oder 26) mit einer zusätzlichen Spannkraft beaufschlagbar ist und Schirmspeichen (15) der Stütz- und Spannstruktur (12), die im Bereich des ellipsenrormigen Reflexionsabschnitts (26) eng am Reflexionselement (11) anliegen, im Bereich des parabelförmigen Reflexionsabschnitts (25) mit einem Abstand zu diesem verlaufen.

2. Reflektorschirm nach Anspruch 1, **dadurch gekennzeichnet, dass** die beiden Reflexionsabschnitte (25, 26) in Bezug auf die Rotationsachse R bzw. Mittelachse M des Reflektorschirms (10) hintereinander liegen.

3. Reflektorschirm nach Anspruch 1 oder 2, **dadurch gekennzeichnet, dass** der im Schnitt ellipsenförmige Reflexionsabschnitt (26) in Richtung der Lichtaustrittsöffnung (24) des Reflektorschirms (10) hinter dem parabelförmigen Reflexionsabschnitt (25) liegt.

4. Reflektorschirm nach einem der Ansprüche 1 bis 3, **dadurch gekennzeichnet, dass** das Reflexionselement (11) aus einem einstückigen Zuschnitt besteht.

5. Reflektorschirm nach einem der Ansprüche 1 bis 4, **dadurch gekennzeichnet, dass** zwischen dem parabelförmigen Reflexionsabschnitt (25) und den Schirmspeichen (15) der Stütz- und Spannstruktur (12) Spannelemente (28) angeordnet sind.

6. Reflektorschirm nach Anspruch 5, **dadurch gekennzeichnet, dass** die Spannelemente (28) derart ausgebildet und eingerichtet sind, dass sie in einer Richtung dehnbar und in anderen Richtungen nicht dehnbar sind.

7. Reflektorschirm nach Anspruch 5 oder 6, **dadurch gekennzeichnet, dass** die Spannelemente (28) jeweils aus im Wesentlichen senkrecht zur Oberfläche des gespannten Reflexionselementes (11) dehnbaren Stoffelementen gebildet sind.

8. Reflektorschirm nach Anspruch 7, **dadurch gekennzeichnet, dass** die Stoffelemente auf der dem Reflexionselement (11) zugewandten Seite fest mit diesem verbunden und auf der anderen Seite an den jeweils zugeordneten Schirmspeichen (15) der Stütz- und Spannstruktur (12) befestigt sind.

9. Reflektorschirm nach einem der Ansprüche 4 bis 8, **dadurch gekennzeichnet, dass** die Spannkraft des Spannmittels (27) einstellbar ist.

10. Reflektorschirm nach einem der Ansprüche 1 bis 9, **dadurch gekennzeichnet, dass** das Reflexionselement (11) auf seiner dem Leuchtmittel (14) zugewandten Innenseite strukturiert ausgebildet ist.

11. Reflektorschirm nach einem der Ansprüche 1 bis 10, **dadurch gekennzeichnet, dass** das tuchartige Reflexionselement (11) aus einem Trägerstoff besteht, auf den eine mit Aluminium bedampfte Kunststofffolie kaschiert ist.

12. Reflektorschirm nach einem der Ansprüche 1 bis 11, **dadurch gekennzeichnet, dass** das Trägerelement (13) in der Weise einer Fokussiereinheit (22) für das oder jedes Leuchtmittel (14) ausgebildet ist, derart, dass das Trägerelement (13) axial in Richtung der Mittelachse M des Reflektorschirms (10) relativ zu diesem verschiebbar ist.

## Claims

1. Foldable reflector screen (10), comprising a flexible, cloth-like reflective element (11) having a supporting and tensioning structure (12) on the outside as well as a carrier element (13) having at least one lamp (14), the reflective element (11) in the opened-up state of the reflector screen (10) forming an essentially rotationally symmetrical body having a light outlet opening (24), **characterised in that** the reflective element (11) is composed of at least two reflective sections (25, 26), the two reflective sections (25, 26) having in each case a different geometrical shape in a section containing the axis of rotation R of the reflector screen (10), wherein one reflective section (25 or 26) in the opened-up state of the reflector screen (10) corresponds to an ellipse in section, and the other reflective section (26 or 25) corresponds to a parabola in section, and wherein in addition to the supporting and tensioning structure (12), there is provided a further tensioning means (27) which is designed and arranged in such a way that one of the reflective sections (25 or 26) can be subjected to an additional tensioning force, and screen spokes (15) of the supporting and tensioning structure (12), which abut closely against the reflective element (11) in the region of the elliptical reflective section (26), in the region of the parabolic reflective section (25) run at a distance from the latter.

2. Reflector screen according to claim 1, **characterised in that** the two reflective sections (25, 26) are located one behind the other in relation to the axis of rotation R or centre axis M of the reflector screen (10).

3. Reflector screen according to claim 1 or 2, **characterised in that** the reflective section (26) which is elliptical in section is located behind the parabolic reflective section (25) in the direction of the light outlet opening (24) of the reflector screen (10).

4. Reflector screen according to any one of claims 1 to 3, **characterised in that** the reflective element (11) consists of a single-piece blank.

5. Reflector screen according to any one of claims 1 to 4, **characterised in that** between the parabolic reflective section (25) and the screen spokes (15) of the supporting and tensioning structure (12) are arranged tensioning elements (28).

6. Reflector screen according to claim 5, **characterised in that** the tensioning elements (28) are constructed and designed in such a way that they are extendable in one direction and not extendable in other directions.

7. Reflector screen according to claim 5 or 6, **characterised in that** the tensioning elements (28) are each composed of fabric elements that can be stretched essentially perpendicularly to the surface of the tensioned reflective element (11).

8. Reflector screen according to claim 7, **characterised in that** the fabric elements on the side facing towards the reflective element (11) are rigidly connected to the latter and on the other side are attached to the respectively associated screen spokes (15) of the supporting and tensioning structure (12).

9. Reflector screen according to any one of claims 4 to 8, **characterised in that** the tensioning force of the tensioning means (27) is adjustable.

10. Reflector screen according to any one of claims 1 to 9, **characterised in that** the reflective element (11) is structured on its inner side facing towards the lamp (14).

11. Reflector screen according to any one of claims 1 to 10, **characterised in that** the cloth-like reflective element (11) is made of a carrier fabric to which is laminated a plastic film to which aluminium is applied by vapour deposition.

12. Reflector screen according to any one of claims 1 to 11, **characterised in that** the carrier element (13) is designed in the manner of a focusing unit (22) for the or each lamp (14) in such a way that the carrier element (13) is axially displaceable in the direction of the centre axis M of the reflector screen (10) relative to the latter.

## Revendications

1. Ecran réflecteur pliable (10), comportant un élément de réflexion flexible (11) de type tissu doté d'une structure de soutien et de tension extérieure (12) ainsi qu'un élément de support (13) doté d'au moins un moyen d'éclairement (14), où l'élément de réflexion (11) forme un corps sensiblement à symétrie de révolution avec une ouverture de sortie de lumière (24) lorsque l'écran réflecteur (10) est à l'état déployé, **caractérisé en ce que** l'élément de réflexion (11) est formé d'au moins deux portions de réflexion (25, 26), les deux portions de réflexion (25, 26) ayant des formes géométriques différentes à chaque fois dans une vue en coupe contenant l'axe de révolution R de l'écran réflecteur (10), l'une des portions de réflexion (25 ou 26) correspondant dans la vue en coupe à une ellipse et l'autre portion de réflexion (26 ou 25) correspondant dans la vue en coupe à une parabole, lorsque l'écran réflecteur (10) est à l'état déployé, et un moyen de tension supplémentaire (27) étant prévu en plus de la structure de soutien et de tension (12), lequel est conformé et disposé de telle sorte que l'une des portions de réflexion (25 ou 26) est sollicitée par une force de tension supplémentaire et des baleines (15) de la structure de soutien et de tension (12), qui portent étroitement contre l'élément de réflexion (11) dans la région de la portion de réflexion elliptique (26), s'étendent dans la région de la portion de réflexion parabolique (25) à distance de celle-ci.

2. Ecran réflecteur selon la revendication 1, **caractérisé en ce que** les deux portions de réflexion (25, 26) sont placées l'une derrière l'autre par rapport à l'axe de rotation R ou l'axe médian M de l'écran réflecteur (10).

3. Ecran réflecteur selon la revendication 1 ou 2, **caractérisé en ce que** la portion de réflexion elliptique (26) dans une vue en coupe est placée en arrière de la portion de réflexion parabolique (25) par référence à la direction de l'ouverture de sortie de lumière (24).

4. Ecran réflecteur selon l'une des revendications 1 à 3, **caractérisé en ce que** l'élément de réflexion (11) est formé à partir d'un flan d'une seule pièce.

5. Ecran réflecteur selon l'une des revendications 1 à 4, **caractérisé en ce que** des éléments de tension (28) sont disposés entre la portion de réflexion parabolique (25) et les baleines (15) de la structure de soutien et de tension (12).

6. Ecran réflecteur selon la revendication 5, **caractérisé en ce que** les éléments de tension (28) sont conformés et disposés de telle sorte qu'ils sont extensibles dans une direction et non extensibles dans d'autres directions.

7. Ecran réflecteur selon la revendication 5 ou 6, **caractérisé en ce que** les éléments de tension (28) sont formés à chaque fois d'éléments de tissu extensibles sensiblement perpendiculairement à la surface de l'élément de réflexion tendue (11).

8. Ecran réflecteur selon la revendication 7, **caractérisé en ce que** les éléments de tissu sont reliés à l'élément de réflexion (11) du côté dirigé vers celui-ci et sont fixés de l'autre côté aux baleines associées (15) de la structure de soutien et de tension (12).

9. Ecran réflecteur selon l'une des revendications 4 à 8, **caractérisé en ce que** la force de tension du moyen de tension (27) est réglable.

10. Ecran réflecteur selon l'une des revendications 1 à 9, **caractérisé en ce que** l'élément de réflexion (11) est conformé de façon structurée sur son côté intérieur dirigé vers le moyen d'éclairement (14).

11. Ecran réflecteur selon l'une des revendications 1 à 10, **caractérisé en ce que** l'élément de réflexion (11) de type tissu est formé à partir d'un tissu de support recouvert d'une feuille de matière plastique métallisée à l'aluminium.

12. Ecran réflecteur selon l'une des revendications 1 à 11, **caractérisé en ce que** l'élément de support (13) est conformé à la manière d'une unité de focalisation (22) pour le ou chaque moyen d'éclairement (14) de sorte que l'élément de support (13) est apte à coulisser axialement par rapport à l'écran réflecteur (10) dans la direction de l'axe médian de celui-ci.
